# EUROPEAN PATENT APPLICATION

(11) **EP 2 546 211 A1**
(43) Date of publication of application: **16.01.2013**
(21) Application number: 11461525.5
(22) Date of filing: 12.07.2011
(51) Int. Cl.: C04B 35/20, C04B 35/195, C04B 35/185, C04B 35/622

(54) **A method of cordierite-mullite pipes manufacture**

(71) Applicant: LZMO Spólka Akcyjna, 68-300 Lubusko (PL)
(72) Inventor: Marchwicki, Maciej, 68-100 Zagan (PL); Czechowski, Jerzy, 44-100 Gliwice (PL); Pawelek, Alicja, 40-203 Katowice (PL)
(74) Representative: Witek, Rafal

(57) **Abstract**

The process of manufacturing of cordierite-mullite pipes from natural resources which contribute MgO, Al₂O₃ and SiO₂, consisting in introducing the materials in the form of granulate, in which the share of MgO ensures after firing achieving the contents of 30-45% of cordierite weights, and the part which contributes this ingredient - talc, has been replaced with micronised natural cordierite in the amount of 5-10% weights.

## Description

The subject of the invention are thin-walled cordierite-mullite pipes, used mainly as chimney liners formed in the process of isostatic pressing.

Cordierite-containing ceramic materials are manufactured by using natural resources with MgO contents as the initial material, usually talc, the presence of which combined with other Al₂O₃- and SiO₂-based components in adequate proportions enables cordierite synthesis in the process of formed ceramic elements firing. An example of applying such a solution can be found in the patent description PL 193717, according to which cordierite elements characterised by low thermal expansion and relatively high porosity have been manufactured by the extrusion method using talc, kaolin, Al₂O₃, AlOOH-xH₂O and silica as well as organic plasticizers. This way, catalyst carriers are produced. Similar talc-based solutions are presented in the application dealing with cordierite mass and the manner of its manufacture - PCT/US2004/001479 as well as in American patent descriptions US 4849275 and US 4896944. In all the described cases, cordierite present in the material, due to its very low thermal expansion, ensures high thermal shock resistance of ceramic elements in which it is contained.

The essential feature of the invention is that cordierite pipes are manufactured from natural resources containing MgO, Al₂O₃ and SiO₂, which are introduced in the form of a granulated product with MgO contents ensuring the formation of 30-45 wt.% of cordierite, and the part introducing this talc component has been replaced with 5-10 wt.% of natural cordierite or cordierite sinter, or micronized chamotte grog, or micronized scrap of cordierite, chamotte or cordierite-chamotte products.

When coexisting with mullite, cordierite ensures high thermal shock resistance of products being the subject of the invention, as well as positively influencing the strength properties of ceramic pipes included in a chimney liner.

Such use of cordierite in the initial composition enables reducing the amount of talc necessary to obtain the established content of cordierite after firing and contributes to the material's reduced shrinkage, while simultaneously facilitating the crystallization and growth of cordierite in the firing process. Fine particles of cordierite provide germs for crystallization and their presence allows a high content of cordierite to be achieved at a relatively low temperature. Ca 30% of cordierite content can already be obtained at a firing temperature of 1150°C.

According to the patent PL 193717, the temperature of firing of a cordierite product made from raw materials which do not contain previously synthesized cordierite is 1340-1440°C. Chimney liners are also characterised by high acid resistance. The introduction of mullite in the form of micronized grog or mullite-cordierite sinter also activates the process of mullitization and influences the reduction of silty components content, thus limiting the firing shrinkage. This finally results in a greater dimensional stability and lower susceptibility to deformations in the process of firing.

Examples of raw materials compositions for the manufacture of granulated products

### Example 1

| | | |
|---|---|---|
| Micronized cordierite grog | - | 10 wt. % |
| Talc | - | 16% wt.% |
| Micronized chamotte grog | - | 10% wt. % |
| Ground refractory clay | - | 59% wt. % |
| Micronized feldspar | - | 5% wt. % |

### Example 2

| | | |
|---|---|---|
| Micronized mullite-cordierite grog | - | 20 wt. % |
| Talc | - | 15 wt. % |
| Kaolinite | - | 30 wt. % |
| Kaolinite-illite clay | - | 35 wt. % |

After firing, both initial compositions should ensure the content of Fe₂O₃ below 2.0%, and the total content of K₂O, Na₂O, CaO below 3.0%.

Binder used in the process of spray drying is introduced into carefully homogenized mixtures having the above compositions. Next it is granulated by means of a spray dryer in a way which enables obtaining the narrowest possible fraction of the granulated product, preferably with particle size distribution reaching 0.25 - 0.5 mm.

The obtained granulated product is used to form thin-walled pipes, having the wall thickness of 6-9 mm and a diameter and height dependent on the needs, at the pressure of 50-80 MPa. The formed pipes are fired at 1150-1270°C. Products obtained using the method proposed in the invention are characterized by a 30-45% content of cordierite, 15-30% content of mullite, open porosity below 7.5% and absorbability below 3.5%.

## Claims

1. The method of cordierite-mullite pipes manufacture from natural resources with MgO, Al₂O₃ and SiO₂ contents **characterized in that** these raw materials are introduced in the form of a granulated product whose MgO content ensures the obtaining of 30-45 wt.% of cordierite after firing, and the part of talk which introduces this component has been replaced by micronized natural cordierite in the amount of 5-10 wt.%.

2. The method according to claim 1 **characterised in that** a cordierite sinter is introduced instead of micronized cordierite.

3. The method according to claims 1-2 **characterised in that** 8-12 wt. % of micronized chamotte grog is introduced beside talc and micronized natural cordierite or cordierite sinter and the amount of silty substance is reduced accordingly.

4. The method according to claims 1, 2 and 3 **characterized in that** the separate introduction of micronized natural cordierite or cordierite sinter and micronized chamotte grog is replaced by the introduction of micronized cordierite-chamotte grog.

5. The method according to claims 1, 2, 3 and 4, **characterized in that** micronized scrap of cordierite and chamotte products or cordierite-chamotte products in the amount ensuring a 5-10% content of cordierite is introduced instead of micronized natural cordierite or cordierite sinter and mullite grog, or micronized cordierite-chamotte grog.
